Europäisches Patentamt

European Patent Office

Office européen des brevets

(19)

(11) Veröffentlichungsnummer: **0 508 260 A2**

## (12) EUROPÄISCHE PATENTANMELDUNG

(21) Anmeldenummer: **92105447.4**

(22) Anmeldetag: **30.03.92**

(51) Int. Cl.⁵: **B32B 3/06**, B32B 27/40

(30) Priorität: **12.04.91 DE 4111909**
**04.07.91 DE 4122099**

(43) Veröffentlichungstag der Anmeldung:
**14.10.92 Patentblatt 92/42**

(84) Benannte Vertragsstaaten:
**BE DE ES FR GB IT SE**

(71) Anmelder: **BAYER AG**

**W-5090 Leverkusen 1 Bayerwerk(DE)**

(72) Erfinder: **Knipp, Ulrich, Dr.**
**Haberlandstrasse 3**
**W-5060 Bergisch Gladbach 2(DE)**
Erfinder: **Skoupi, Dieter**
**Rheinstrasse 24**
**W-5253 Lindlar(DE)**

(54) **Sandwichelement in Form von Platten, Schalen und dergleichen.**

(57) Sandwichelemente (1, 2) in Form von Platten, Schalen und dergleichen aus Deckschichten (3, 4) und einem Polyurethan-Hartschaumstoffkern (5) auf Basis Polyisocyanat lassen sich luft- und wasserdicht verbinden, wenn sie mit Randprofilen (8, 9) versehen sind, welche aus weiches Polyurethan bildenden Gießmassen angegossen sind und Nut (11) und Feder (10) aufweisen.

FIG.1

EP 0 508 260 A2

Die Erfindung betrifft ein Sandwichelement in Form von Planen, Schalen und dergleichen, bestehend aus Deckschichten und einem Polyurethan-Hartschaumstoffkern auf Basis Polyisocyanat sowie aus Randprofilen.

Bei Sandwichelementen, welche miteinander lösbar oder dauerhaft verbunden werden sollen, gibt es Probleme bei der luft- und wasserdichten Abdichtung der Verbindungsstellen wegen der tragenden Deckschichten aus Aluminiumfolie, Stahlblech, Kunststoffolie oder Verbundpapieren. Die gebräuchliche Verklebung mit Profilen aus geeigneten Fremdmaterialien, wie Holz, Metall, Kunststoff, ist aufwendig und wegen der geringen Festigkeit des Schaumstoffkerns sehr schlagempfindlich. Innere Spannungen führen zu einem schnellen Lösen der Verbindung zwischen dem eigentlichen Sandwichelement und dem Randprofil oder es tritt Verzug auf. Insbesondere verursachen unterschiedliche Wärmedehnungskoeffizienten auch Risse.

Es besteht die Aufgabe, Sandwichelemente der eingangs genannten Art, welche an sich eine optimale Stabilität aufweisen, mit Verbindungsmöglichkeiten auszustatten, welche luft-, wasserdicht und haltbar sowie verzug- und rißfrei sind.

Diese Aufgabe wird dadurch gelöst, daß die Randprofile aus weiches Polyurethan bildenden Gießmassen angegossen sind und Nut und Feder aufweisen.

Die Sandwichelemente können nach bewährten Verfahren kontinuierlich, beispielsweise im Doppeltransportband, oder diskontinuierlich, beispielsweise in Stützformen, hergestellt sein. Das Angießen der Randprofile erfolgt, soweit es sich nicht gleichzeitig durchführen läßt, in einem besonderen Verfahrensschritt, indem man die Elemente in ein entsprechendes Formwerkzeug einlegt, in welchem dann die Randprofile angegossen werden. Es hat sich überraschenderweise gezeigt, daß gerade weiches Polyurethan die Anforderungen erfüllt, was nicht zu erwarten war.

Die neuartigen Sandwichelemente lassen sich je nach Gestaltung für die verschiedensten Zwecke einsetzen:

Im Bausektor als Wandelemente, Dachelemente, Kanäle für Lufttransport in der Klimatechnik, Isolationen für Rohrleitungen, Jalousie-Kästen, Schalbretter, Türblätter;
im Fahrzeugsektor als Wände, insbesondere Zwischenwände für PKW, Omnibusse und LKW-Aufbauten;
im Möbelsektor für stabile Kastenmöbel, Kühlmöbel, Schubladen, als Steckverbindungen.

Andere Anwendungen sind stabile Leichtwannen, beispielsweise großflächige Wannen in Reparatur-Werkstätten für die Aufnahme von Öl oder Transportbehälter für Nahrungsmittel. Eine besonders günstige Anwendung Finden sie als zusammenlegbare Behälter, beispielsweise für Bahn- und Luftfracht.

Für viele Anwendungszwecke ist es ausreichend, die Elemente einfach zusammenzustecken. Für unlösbare Verbindungen verwendet man vorzugsweise Kleber auf Basis Epoxidharz, Polyurethan und Polychloropren-Kautschuk oder Nut- und Federverbindungen mit Hinterschneidungen.

Auch in diesem Falle können die allgemein bekannten Nut- und Federgestaltungen angewendet werden. Da man Luft- und Wasserdichtigkeit erzielen will, muß eine gewisse Paßgenauigkeit vorhanden sein, da die Elastizität des Weichpolyurethans nicht alle Ungleichheiten abdichtend ausgleichen kann.

Besonders gute Abdichtung wird erzielt, wenn die Randprofile aus ungefülltem Polyurethan mit einer Shorehärte A unter 98, vorzugsweise zwischen 60 und 90, bestehen.

Gemäß einer weiteren besonderen Ausführungsform bestehen die Randprofile mit Nut einerseits und die Randprofile mit Feder andererseits aus Polyurethan mit unterschiedlicher Shorehärte A.

Die Abstufung der Härte bzw. der Weichheit hat den Vorteil, daß ein Randprofil etwas steifer ist als das andere und damit der Verbindungsstelle höhere Stabilität verleiht, während das weichere vorwiegend die Aufgabe der Abdichtung übernimmt.

Gegen Verzug sind Randprofile aus mit Füllstoffen angereichertem Polyurethan besonders geeignet, welches einen thermischen Ausdehnungskoeffizienten von $< 60 \times 10^{-6}/°C$ besitzt.

Sofern die Sandwichelemente nur an den Längsseiten mit Randprofilen versehen sind, weisen die Stirnseiten Anschrägungen auf, welche vom Randprofil ausgefüllt sind.

Diese Maßnahme ergibt eine höhere Festigkeit und eine bessere Abdichtung und bietet den häufig besonders gefährdeten Eckbereichen erhöhten Schutz.

Eine besonders gute Verbindung der Randprofile mit dem eigentlichen Sandwichelement ist zu erzielen, indem die Deckschichten den Hartschaumstoffkern überragen und der überragte Raum durch die Randprofile ausgefüllt ist.

Diese Konstruktion ermöglicht eine Flächenhaftung zwischen den Deckschichten und den Randprofilen, wodurch besonders hohe Randsteifigkeiten und Festigkeiten der Verbindung erzielt werden.

In der Zeichnung ist das neue Sandwichelement bzw. die Verbindung derartiger Sandwichelemente in mehreren Ausführungsbeispielen rein schematisch im Schnitt dargestellt und nachstehend näher erläutert. Es zeigen:

Fig. 1    Sandwichelemente mit einer ersten Ausführungsform der Verbindung,

Fig. 2    Sandwichelemente mit einer zweiten Ausführungsform der Verbindung,

Fig. 3    zu einem Kanal zusammengesetzte Sandwichelemente und

Fig. 4    Sandwichelemente in Form von zusammengefügten Isolierhalbschalen für Rohrleitungen.

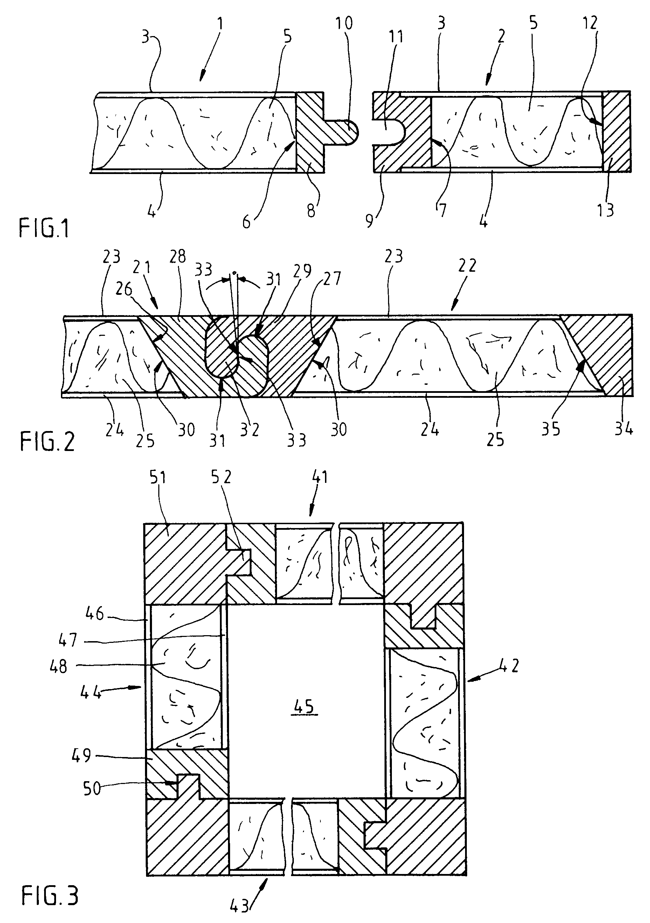

In Fig. 1 bestehen die Sandwichelemente 1, 2 aus Deckschichten 3, 4 aus Stahlblech, welche zwischen sich einen Polyurethan-Hartschaumstoffkern 5 auf Basis Polyisocyanat einschließen. Die Ränder 6, 7 sind mit angegossenen Randprofilen 8, 9 aus Polyurethan versehen, wobei beim Sandwichelement 2 die Deckschichten 3, 4 den Polyurethan-Hartschaumstoffkern 5 überragen, so daß das Randprofil 9 diesen Raum zwischen den Deckschichten 3, 4 ausfüllt Das Randprofil 8 besitzt eine angeformte Feder 10, welche mit einer entsprechenden Nut 11 des Randprofils 9 luft- und wasserdicht zusammenpaßt. An den Rand 12 ist ein Abschlußprofil 13 angegossen. Die Randprofile 8, 9 und das Abschlußprofil 13 wurden in einem entsprechenden Formwerkzeug, in welchem die Sandwichelemente 1, 2 eingelegt wurden, angegossen. Verwendet wurde eine Polyurethan-Gießmasse, welche ein weiches ungefülltes Polyurethan mit einer Shorehärte A von 80 bildet und einen thermischen Ausdehnungskoeffizienten von 120 x $10^{-6}/°C$ aufweist. Die Passung zwischen Feder 10 und Nut 11 ist so gewählt, daß ein strammer Klemmsitz vorhanden ist.

In Fig. 2 bestehen die Sandwichelemente 21, 22 aus Deckschichten 23, 24 aus Aluminiumfolie, welche zwischen sich einen Polyurethan-Hartschaumstoffkern 25 auf Basis Polyisocyanat einschließen. Ihre Ränder 26, 27 sind mit angegossenen Polyurethan-Randprofilen 28 und 29 versehen, wobei zwischen den plattenartigen Sandwichelementen 21, 22 und den angegossenen Randprofilen 28, 29 als Grenzflächen Anschrägungen 30 vorhanden sind. Nut 31 und Feder 32 sind hier an jedem Randprofil 28,29 vorhanden, greifen hakenartig ineinander und weisen eine Hinterschneidung 33 mit 10° zur Senkrechten auf. Am Sandwichelement 22 ist ein Abschlußprofil 34 vorgesehen, welches ebenfalls mit dem eigentlichen Sandwichelement 22 eine Anschrägung 35 aufweist. Als Polyurethan-Gießmasse wurde für die Randprofile 28, 29 und das Abschlußprofil 34 die gleiche gewählt wie für die Ausführungsform gemäß Fig. 1.

In Fig. 3 sind vier Sandwichelemente 41, 42, 43, 44 im Rechteck angeordnet, so daß sie einen Kanal 45 einschließen. Jedes besteht aus Kunststoff-Deckschichten 46, 47, zwischen denen ein Polyurethan-Hartschaumstoffkern 48 auf Basis Polyisocyanat angeordnet ist. An die Sandwichelemente 41, 42, 43, 44 sind einerseits Randprofile 49 mit Nuten 50 und andererseits Randprofile 51 mit Federn 52 angegossen, wobei, um die Rechteckform zu ermöglichen, Nut 50 und Feder 52 eines jeden Sandwichelementes 41, 42, 43, 44 in Ebenen senkrecht zueinander angeordnet sind. Hierbei weist das Polyurethan der Randprofile 49 eine Shorehärte A von 60 auf, während dasjenige der Randprofile 51 eine solche von 80 besitzt.

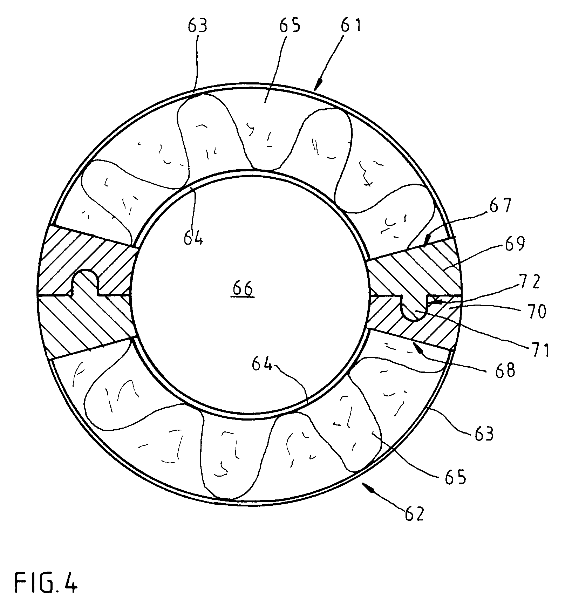

Fig. 4 zeigt Sandwichelemente 61, 62 in Form von Halbschalen für eine Rohrleitungsisolierung. Jedes besteht aus Deckschichten 63, 64, welche zwischen sich einen Polyurethan-Hartschaumstoffkern 65 auf Basis Polyisocyanat einschließen. Die Längsränder 67, 68 sind mit angegossenen Randprofilen 69, 70 versehen, zwischen denen die Randprofile 69 jeweils eine Feder 71 und die Randprofile 70 jeweils eine Nut 72 aufweisen. Die Randprofile 69, 70 sind hier mit einem Kleber unlösbar verbunden. Es wurde eine mit 40 % Kurzglasfasern (milled fibers) gefüllte Polyurethan-Gießmasse mit einem thermischen Ausdehnungskoeffizienten von 60 x $10^{-6}/°C$ für die Randprofile 69, 70 verwendet.

**Patentansprüche**

1. Sandwichelement (1, 2; 21, 22; 41, 42, 43, 44; 61, 62) in Form von Platten, Schalen oder dergleichen, bestehend aus Deckschichten (3, 4; 23, 24; 46, 47; 63, 64) und einem Polyurethan-Hartschaumstoffkern (5; 25; 48; 65) auf Basis Polyisocyanat sowie aus Randprofilen (8, 9; 28, 29; 49, 51; 69, 70), dadurch gekennzeichnet. daß die Randprofile (8, 9; 28, 29; 49, 51; 69, 70) aus weiches Polyurethan bildenden Gießmassen angegossen sind und Nut (11; 31: 50; 72) und Feder (10; 32; 52; 71) aufweisen.

2. Sandwichelement nach Anspruch 1, dadurch gekennzeichnet, daß die Randprofile (8, 9; 28, 29; 49, 51; 69, 70) aus ungefülltem Polyurethan mit einer Shorehärte A unter 98, vorzugsweise zwischen 60 und 90, bestehen.

3. Sandwichelement nach einem der Ansprüche 1 oder 2, dadurch gekennzeichnet, daß die Randprofile (28) mit Nut (31) einerseits und die Randprofile (29) mit Feder (32) andererseits aus Polyurethan mit unterschiedlicher Shorehärte A bestehen.

4. Sandwichelement nach Anspruch 1, 2 oder 3, dadurch gekennzeichnet, daß die Randprofile (8, 9; 28, 29; 49, 51; 69, 70) aus mit Füllstoffen angereichertem Polyurethan bestehen, welches einen thermischen Ausdehnungskoeffizienten von < 60 x $10^{-6}/°C$ besitzt.

5. Sandwichelement nach einem der Ansprüche 1 bis 4, dadurch gekennzeichnet, daß dessen Stirnseiten Anschrägungen (30) aufweisen, welche von dem Randprofil (28, 29) ausgefüllt sind.

6. Sandwichelement nach einem der Ansprüche 1 bis 5, dadurch gekennzeichnet, daß die Deckschichten (3, 4) den Hartschaumstoffkern (5) überragen und daß der überragte Raum durch das Randprofil (8) ausgefüllt ist.

7. Sandwichelement nach einem der Ansprüche 1 bis 6, dadurch gekennzeichnet, daß Nut (31) und/oder Feder (32) mit Hinterschneidungen (33) versehen sind.

FIG.1

FIG.2

FIG.3

FIG.4